# EUROPEAN PATENT SPECIFICATION

(11) **EP 2 257 189 B1**
(45) Date of publication and mention of the grant of the patent: **17.08.2011**
(21) Application number: 09715014.8
(22) Date of filing: 27.02.2009
(51) Int. Cl.: A23L 1/22, A21D 2/00, A23L 1/314, A21D 2/08, A21D 13/00

(54) **FLOUR-BASED FOOD PRODUCT WITH INHOMOGENEOUS TASTANT BULK DISTRIBUTION AND METHOD FOR MAKING SUCH FOOD PRODUCT**
NAHRUNGSMITTEL AUF MEHLBASIS MIT INHOMOGENER GESCHMACKSSTOFFVERTEILUNG SOWIE VERFAHREN ZUR HERSTELLUNG EINES SOLCHEN NAHRUNGSMITTELS
PRODUIT ALIMENTAIRE À BASE DE FARINE PRÉSENTANT UNE DISTRIBUTION EN VRAC D'UN EXHAUSTEUR DE GOÛT NON HOMOGÈNE ET PROCÉDÉ DE FABRICATION D'UN TEL PRODUIT ALIMENTAIRE

(30) Priority: 29.02.2008 EP 08152157
(43) Date of publication of application: 08.12.2010
(73) Proprietor: CSM Nederland B.V., 1112 XE Diemen (NL)
(72) Inventor: STIEGER, Markus Alexander, NL-6721 DA Bennekom (NL); BULT, Johannes Hendrikus Franciscus, NL-3823 CS Amersfoort (NL); HAMER, Robert Jan, NL-3813 RS Amersfoort (NL); NOORT, Martijn Willem Jan, 3703 BV Zeist (NL)
(74) Representative: Swinkels, Bart Willem
(86) International application number: PCT/NL2009/050092
(87) International publication number: WO 2009/108058

(56) References cited:
- AU-B4- 2005 100 266
- US-A1- 2003 215 554
- US-B1- 6 312 741

## Description

### Field of the invention

The invention relates to a flour-based food product with an inhomogeneous distribution of a food component. The invention further relates to a method for making such food product. The invention also relates to the use of an inhomogeneous distribution of a food component in a food product.

### Background of the invention

The use of encapsulated products for making food products, especially baked goods, is for instance described in US6312741. US6312741 discloses that the preservation of certain food products entails the provision of an acidic environment to the product to provide stability against microbiological contamination. Food grade acids are typically used in baking formulations to provide an acidic environment to a baked good. US6312741 further indicates that the incorporation of food grade acids, however, presents problems for baked goods. When lood acids are added to bread they have a negative effect on the proteins (gluten) in the bread, as well as on the chemical leavening system. Further according to US6312741, the addition of preservative acids to bread dough would also have a negative effect on the bread leavening system. A further negative effect according to US6312741 which occurs as a result of the dough having acidic properties is that the capacity of the dough to hold water is decreased. Therefore, US6312741 proposes a method and composition for providing bread dough an acid environment conducive to preserving antimicrobial ingredients after baking without deleteriously affecting the bread dough prior to baking. The ingredient is a monodispersed fumaric acid particulate having a mean particle size of from about 70 microns to about 140 microns which is encapsulated with a coating having a melting point within normal baking temperature. The method includes incorporating the coated monodispersed fumaric acid particulate into bread dough. Preferably, the bread dough composition is a tortilla dough composition.

Further, WO0074499 describes a low melt encapsulate with a narrow melting point range, a process to manufacture such a low melt encapsulate, and the use of such a low melt encapsulate in the production of foods. According to WO0074499, the use of a low melt vegetable oil has several advantages over conventional vegetable oil products, especially when used in food systems. In one embodiment, the low melt vegetable oil is a high laurate vegetable oil, and in particular, a canola high laurate vegetable oil. A food grade acid may for instance be encapsulated with a low melt oil, and the encapsulated acid may be used in the manufacture of low temperature meat products such as sausage. In another embodiment of WO0074499, a live culture of micro organisms is encapsulated using the low melt vegetable oil.

WO 2008074606 describes a food composition is provided useful for decreasing the amount of sodium while maintaining a high perceived saltiness of said food composition. The food composition comprises a particulate phase and a soluble phase and a selective sodium distribution between said phases whereby the amount of sodium in the particulate phase is at least 4 wt%, more preferably at least 10 wt%, more preferably at least 15 wt% and most preferably at least 20 wt%, and preferably at most 99.99 wt%, more preferably at most 99 wt%, more preferably at most 90 wt%, most preferably at most 70 wt% by weight of the total amount of sodium in the particulate and soluble phase.

AU2005100266 relates to a shaped food product, particularly to a meat pie that has a particular configuration to provide various benefits and advantages both in eating the pie, but also in transportation, storage and warming.

### Summary of the invention

It has been found by the present inventors that an uneven distribution of tastants may provide specific sensory effects to the consumer. For instance, it has been observed that an inhomogeneous tastant bulk distribution in a food product can be used for enhancing and/or improving the sensory perception of the tastant in a food product. It has further been found that an inhomogeneous tastant bulk distribution in a food product can be used for providing a food product with a reduced tastant bulk weight percentage.

The present prior art does not provide or indicate a (suitable) method for providing an uneven distribution of food components in a food product, especially not of tastants. For instance, the prior art does not provide a method to lower for instance the salt content in a food product, although there is a desire to do so, especially with respect to sodium salts.

Hence, it is an aspect of the invention to provide an alternative method for the production of a food product, which preferably further obviates one or more of above-described drawbacks.

According to a first aspect, the invention provides a method for the production of a composite bakery product (such as the herein described flour-based bakery product) comprising: (a) preparing a first flour-based dough containing 0.05-15 wt. %, more preferably 0.1-15 wt.%, of a tastant, preferably a tastant as defined below, yet even more preferably a tastant selected from the group consisting of a sugar, a sweetener, a salt, a taste potentiator and an acidulant (and optionally a tastant selected from the other herein described tastants); (b) preparing a second flour-based dough not containing said tastant or containing said tastant in a weight percentage that is equal to or less than 75%, preferably equal to or less than 50%, of the weight percentage of the same tastant in the first flour-based dough; (c) combining the first flour-based dough with the second flour-based dough in a weight ratio that is preferably within the range of 1:20 to 20:1, more preferably 1:10-10:1, to produce a dough composite (with distinct flour-based bulk regions); and (d) optionally further processing the dough composite, such as pre-baking or baking the dough composite.

In yet a further aspect, the invention provides a method for the production of a food product comprising a tastant (such as the herein described flour-based bakery product), the food product having a tastant bulk weight percentage and an inhomogeneous tastant bulk distribution, wherein the method comprises:
a. combining a first portion of starting materials for making the food product and a second portion of starting materials for making the food product; and
b. (optionally further) preparing the food product,
wherein the first portion of starting materials further comprises the tastant with a first portion tastant weight percentage, wherein the second portion of starting materials further optionally comprises the tastant with a second portion tastant weight percentage, and wherein the second portion tastant weight percentage is in the range of about 0-75 % of the first portion tastant weight percentage, especially in the range of about 0-50 %, and wherein preferably the first portion of starting materials and the second portion of starting materials are, except for the tastant, substantially identical with respect to composition (of the respective portions). In this way, a composite food product, such as the flour-based bakery product, may be obtained.

The term "portion" may also relate to a plurality of portions.

Thus, especially a method is provided for the production of a food product (such as the herein described flour-based bakery product) comprising a tastant, the food product having a mean tastant weight percentage and an inhomogeneous tastant distribution in the food product (i.e. inhomogeneous distribution in the bulk), wherein the method comprises:
a. combining a first portion of starting materials for making the food product and a second portion of starting materials for making the food product; and
b. (optionally further) preparing the food product,
wherein the first portion of starting materials further comprises the tastant with a first weight percentage (relative to the first portion), wherein the second portion of starting materials further optionally comprises the tastant with a second weight percentage (relative to the second portion), and wherein the second weight percentage is in the range of about 0-75 % of the first weight percentage, especially in the range of about 0-50 %.

Thereby, the first portion of starting materials and the second portion of starting materials may, except for the tastant, substantially be identical with respect to composition (of the first and second portion, respectively.

Yet, to a further aspect, the invention also provides a method for preparing a food product (such as the herein described flour-based bakery product) comprising:
a. preparing a first portion of starting materials comprising a tastant with a first weight percentage relative to the first portion;
b. preparing a second portion of starting materials, optionally comprising the tastant with a second weight percentage relative to the second portion, wherein the second weight percentage is in the range of about 0-75 % of the first weight percentage, especially in the range of about 0-50 %;
c. combining the first portion and second portion to produce a food product;
d. optionally further processing the food product.

After combining (c) the first and second portion, an intermediate or final product may be obtained. After further processing (d) the food product, an intermediate (such as a pre-baked bread), or a final product (such as a bread) may be obtained.

Herein, the food product, obtained, either after combining (c) or after the optional further processing (d) may also be indicated as "composite food product".

The food product obtainable by the methods of the invention is especially characterized by distinct regions, also indicated as distinct bulk regions. The food product preferably comprises at least two bulk regions having different respective weight ratios of a tastant.

The first and the second portions are preferably combined in a weight ratio in the range of 1:20-20:1. Except for the tastant, the portions may further substantially be identical with respect to composition.

Both the "first portion of starting materials for making the food product" and "second portion of starting materials for making the food product" each independently may comprise the essential ingredients to make the food. However, since the first portion and the second portion have different tastant weight percentages, the combination of the portions may provide a food product with an inhomogeneous tastant bulk concentration.

Preferably, the first portion consists of a plurality of components (such as macro nutrients), each having a weight percentage relative to the first portion, and the second portion consists of a plurality of components (such as macro nutrients), each having a weight percentage relative to the second portion, and, preferably, the sum of overlapping weight percentages for the respective components for the first portion and the second portion is at least 50 wt.%, preferably 90 wt.%, even more preferably at least about 95 wt.% (this is herein also indicated as "identicality weight percentage"). Below, some examples are displayed.

The first and second portion are preferably flour-based doughs, respectively (see also above).

According to a further aspect of the invention, there is provided, a flour-based bakery product comprising at least two distinct flour-based bulk regions, including: (a) 5-95% by weight of the bakery product of a first flour-based bulk region ("first bulk region") comprising 0.05-15%, more preferably 0.1-15%, of a tastant by weight of said first bulk region, said tastant preferably being selected from the herein defined tastants, yet even more preferably from the group consisting of a sugar, a sweetener, a salt, a taste potentiator and an acidulant; and (b) 5-95% by weight of the bakery product of another, second flour-based bulk region ("second bulk region") not containing said tastant or containing said tastant in a weight percentage that is equal to or less than 75%, preferably equal to or less than 50% of the weight percentage of the same tastant in the first flour-based bulk region; wherein preferably the first flour-based bulk region and the second flour-based bulk region together represent at least 30 wt.%, preferably at least 60 wt.% of the bakery product.

Preferably, the composition of the first flour-based bulk region defined in percentage by weight and the composition of the second flour-based bulk region defined in percentage by weight are at least 90 wt.%, preferably at least 95 wt.% identical (i.e. ID percentage) (see also below).

According to yet a further aspect, there is provided a food product comprising a tastant, the food product having a tastant bulk weight percentage and an inhomogeneous tastant bulk distribution, wherein the food product comprises:
a. a first bulk region comprising the tastant, the first bulk region having a first bulk region tastant weight percentage; and
b. a second bulk region optionally comprising the tastant, the second bulk region having a second bulk region tastant weight percentage,
wherein the second bulk region tastant weight percentage is in the range of about 0-75 % of the first bulk region tastant weight percentage, and wherein preferably the first bulk region and the second bulk region each independently have a volume of at least about 1 mm³, respectively, and wherein preferably the first bulk region and the second bulk region are, except for the tastant, substantially identical with respect to composition.

Thus, especially a food product comprising a tastant, the food product having a mean tastant weight percentage and an inhomogeneous tastant distribution (i.e. of the tastant in the bulk of the food product), wherein the food product comprises:
a. a first region (in the bulk) comprising the tastant, the first region having a first tastant weight percentage (of that first region); and
b. a second region (in the bulk) optionally comprising the tastant, the second region having a second tastant weight percentage (of that second region),
wherein the second tastant weight percentage is in the range of about 0-75 % of the first tastant weight percentage, and wherein preferably the first region and the second region each independently have a volume of at least about 1 mm³, respectively.

Thereby, the first bulk region and the second bulk region may, except for the tastant, substantially be identical with respect to composition (see also the herein defined identicality weight percentage). As will be clear to a person skilled in the art, the food product may comprise a plurality of such first and second regions.

The food product is especially a flour-based bakery product. Such bakery product may preferably be selected from the group consisting of bread, baked pastry products, pretzels, crackers, a cookie, and a biscuit.

Herein, the tastant may especially comprise one or more tastants selected from the group consisting of bitter, sweet, sour, salty and umami tastants, more especially selected from the group consisting of sugars, sweeteners, salts, taste potentiators and acidulants. As will be clear to the person skilled in the art, the phrase "one or more tastants selected from the group consisting of..." may include combinations of two or more tastants, including combinations of different tastants within the same tastant category, such as a mixture of salts.

The tastant may also comprise a kokumi tastant. Hence, the tastant may especially comprise one or more tastants selected from the group consisting of bitter, sweet, sour, salty, kokumi, and umami tastants.

The invention also provides a food product (especially a flour-based bakery product) comprising a tastant, wherein the tastant is inhomogeneously distributed in the bulk of the food product, wherein the food product comprises a first bulk region and a second bulk region, wherein the first bulk region comprises the tastant with a first weight percentage relative to the first bulk region, wherein the second bulk region optionally comprises the tastant with a second weight percentage relative to the second bulk region, wherein the second bulk region comprises the tastant with a second weight percentage in the range of 0-75% of the first weight percentage of the tastant in the first bulk region, and wherein the first bulk region and the second bulk region each independently have a volume of at least 1 mm³.

Herein, preferably the first bulk region and the second bulk region are, except for the tastant, substantially identical with respect to composition.

Preferably, the first bulk region consists of a plurality of components (such as macro nutrients), each having a weight percentage relative to the first bulk region, and the second bulk region consists of a plurality of components (such as macro nutrients), each having a weight percentage relative to the second bulk region, and, preferably, the sum of overlapping weight percentages for the respective components for the first bulk region and the second bulk region is at least 50 wt.%, preferably 90 wt.%, even more preferably at least about 95 wt.% (this is herein also indicated as "identicality weight percentage"). Below, some examples are displayed.

The more the bulk regions are identical, the more the organoleptic properties may be perceived the same; i.e. the consumer does not perceive an inhomogeneous product although there is a component, the tastant, inhomogeneously distributed.

As mentioned above, the food product may comprise a plurality of first bulk regions or a plurality of second bulk regions or a plurality of first bulk regions and a plurality of second bulk regions.

For instance, the food product is a mixed product. The food product may for instance be a kneaded food product, such as in an embodiment a (co-)extrudate. The food product may also comprise a laminate comprising alternating layers with different tastant weight percentages, wherein a second layer as second bulk region in contact with a first layer as first bulk region comprises the tastant with a second weight percentage in the range of 0-75% of the first weight percentage of the tastant in the first layer.

In a specific embodiment, the food product is a flour-based product (such as a dough or a bread, like a dough laminate or a (pre-baked) bread baked from a dough laminate. Hence, the term "food product" herein especially refers to a flour-based bakery product.

For instance, bread as food product with salt as tastant, prepared according to the method of the invention may exhibit an inhomogeneous spatial distribution of salt which advantageously enhances the sensory perception of saltiness. By those means, the salt concentration in bread can be reduced without deteriorating the perception of saltiness.

Hence, according to a further aspect the invention provides the use of an inhomogeneous tastant bulk distribution in a food product for providing a food product with a reduced tastant bulk weight percentage. According to yet another aspect, the invention provides the use of an inhomogeneous tastant bulk distribution in a food product for enhancing and/or improving the sensory perception of the tastant in a food product.

Especially, inhomogeneities in the tastant content over length scales in the range of millimetres may provide the desired effect. Hence, in a preferred embodiment, in the food product there is a shortest distance between two bulk regions of the same type (such as two first bulk regions or two second bulk regions) measured through the intermediate bulk region of another type (such as a second bulk region or a first bulk regions, respectively) is in the range of 0.5-500 mm, preferably in the range of 0.5-100 mm, even more preferably 0.5-60 mm, like 1-60 mm, especially 0.5-30 mm, such as especially 1-20 mm, yet even more preferably in the range of 1-10 mm.

### Brief description of the drawings

Embodiments of the invention will now be described, by way of example only, with reference to the accompanying schematic drawing in which corresponding reference symbols indicate corresponding parts, and in which:
Figure 1a-c schematically depict embodiments of a food product according to the invention: Figures 1a-1c show cross sections of the food product; and
Figure 2a schematically depicts a specific embodiment of a food product according to the invention, wherein the food product is bread. Figure 2a schematically depicts a slice of bread or a cross section of bread. Figure 2b schematically depicts a perspective view of a bread according to an embodiment of the invention.

### Description of preferred embodiments

### General

As mentioned above, the invention provides a method for the production of a food product comprising a tastant. The food product according to the invention, obtainable according to the method of the invention, has a tastant bulk weight percentage and an inhomogeneous tastant bulk distribution. This means that although the tastant is distributed unevenly, there is a mean tastant bulk weight percentage. The mean tastant bulk weight percentage in the food product, relative to the weight of the food product, is herein also indicated as "tastant bulk weight percentage". For some food products and for some tastants, the bulk weight percentage of the tastant may be defined by law.

The fact that the tastant is distributed unevenly throughout the food product does not exclude that on a smaller scale than the whole food product the tastant may be distributed evenly. For instance, in specific regions within the food product, the tastant distribution may substantially be homogeneous (see also below). However, there are regions in the food product that have different tastant bulk weight percentage than other regions in the food product. Therefore, the food product according to the invention has an inhomogeneous tastant bulk distribution.

The terms "bulk distribution" and "bulk weight percentage" are used to indicate that the uneven tastant distribution is at least present in the bulk of the food product. The term "bulk" is especially applied to distinguish over products that may have a tastant coating or a tastant particle coating. The latter coating may for instance be indicated as an "inhomogeneous tastant coating distribution". Although the product according to the invention may have such tastant coating or tastant particle coating, the product according to the invention at least comprises the herein described inhomogeneous tastant *bulk* distribution. The term "bulk" may in an embodiment also be interpreted as anything in the food product at a distance of about 0.2 mm, more especially at a distance of about 0.5 mm from the surface of the food product, even more especially at a distance of about 5 mm from the surface of the food product.

The food product according to the invention may especially be a baked food product, such as a baked dough product. Especially in such food products, good results may be obtained. It appears that e.g. an uneven salt distribution, according to an embodiment of the invention, may be used to trigger the salt perception of the consumer. For instance, the bread may appear to have a "normal" mean salt content (i.e. tastant bulk weight percentage), whereas the actual salt content is lower than the normal mean salt content. However, by applying the inhomogeneous salt distribution according to an embodiment of the invention, a "normal" mean salt content is perceived by the consumer.

However, the invention is not directed to bread products or other baked dough products only. The food product may comprise any food product, particularly a solid or semi-solid food product, more especially food products selected from the group consisting of bread, baked dough products, baked pastry products, pretzels, crackers, cookies, and biscuit.

The term "food product" especially refers to a ready to eat food product.

### Method of the invention

The method of the invention comprises in an embodiment:
a. combining a first portion of starting materials for making the food product and a second portion of starting materials for making the food product; and
b. preparing the food product.

The terms "first portion of starting materials for making the food product" and "second portion of starting materials for making the food product" relate to portions or premixes that in its own would qualify to provide the food product (especially with an homogeneous bulk tastant distribution).

In a specific embodiment, the invention provides a method for the production of a composite bakery product comprising:
a. preparing a first flour-based dough containing 0.05-15 wt. % of a tastant selected from the group consisting of a sugar, a sweetener, a salt, a taste potentiator and an acidulant;
b. preparing a second flour-based dough not containing said tastant or containing said tastant in a weight percentage that is equal to or less than 50% of the weight percentage of the same tastant in the first flour-based dough;
c. combining the first flour-based dough with the second flour-based dough in a weight ratio that is preferably within the range of 1:20 to 20:1 to produce a dough composite (with distinct flour-based bulk regions); and
d. optionally further processing the dough composite, such as pre-baking or baking the dough composite.

For instance, referring to a bread product, the first portion of starting materials for making the food product and second portion of starting materials for making the food product may both be dough, however, the portions having different tastant weight percentages.

Hence, a prior art system such as described in AU2005100266 does not relate to the present invention. The parts described there, such as the meat part and the pie part, are on their own not able to provide the food product, since the food product is the meat pie, and the pie part is only able to provide the pie and the meat part is only able to provide the meat.

In a specific embodiment, both the "first portion of starting materials for making the food product" (such as the first flour-based dough) and "second portion of starting materials for making the food product" (such as the second flour-based dough) each independently comprise the essential ingredients to make the food product (with a homogenous bulk tastant distribution), but since the first portion of starting materials comprises the tastant with a first portion tastant weight percentage, and the second portion of starting materials further optionally comprises the tastant with a second portion tastant weight percentage, the combination of the "first portion of starting materials for making the food product" and "second portion of starting materials for making the food product" may provide a food product with an inhomogeneous tastant bulk concentration.

Hence, the first portion or the second portion will in an embodiment not consist of the tastant, but comprise also other ingredients. Hence, the tastant weight percentage in the first and in the second portion will in general independently be lower than about 90 wt.%, and in case of non-sweet tastants especially independently below about 50 wt.%, even more especially below about 30 wt.%, yet even more especially below about 10 wt.%, even more especially below about 5 wt.%, relative to the weight of the first or second portion, respectively. When more than one tastant is present in the first or the second portion, these numbers may apply to the sum of the weight percentage of the tastants in the first and the second portion, respectively.

In a specific embodiment, the "first portion of starting materials for making the food product" and "second portion of starting materials for making the food product" are substantially identical with respect to composition (i.e. starting material(s) or components (other than the tastant(s))) included in the respective portion. Where more than one starting material is contained in the composition preferably also the relative amounts of those starting materials in the respective portions), are substantially identical.

In a further embodiment, the "first portion of starting materials for making the food product" and "second portion of starting materials for making the food product" are substantially identical with respect to composition (i.e. starting material(s) and/or relative amounts of those starting materials in the respective portions) except for the tastant, and optionally except for one or more of the other optional starting materials selected from the group consisting of flavours, aromas, colouring agents, and seasonings, and optionally except for one or more of the starting materials selected from preservation agents and anti-bacterials, and optionally except for one or more of the starting materials selected from the group consisting of emulsifiers (such as Datems (Datems may be formed by reacting diacetyltartaric anhydride with partial glycerides of edible oils, fats or fat-forming fatty acids. Sources of glycerides for the production of Datems include soy oil, palm oil, sunflower oil, beef tallow and monoglycerides. Datems can also be obtained from commercial sources), mono- and diglycerides, lactylates, Citrems, Acetems, lecithins), enzymes (such as amylases, hemicellulases, cellulases, lipases, peroxidases, glucoseoxidases, lipoxigenases, proteases), and redox substances (such as ascorbic acid).

Hence, the first portion of starting materials and the second portion of starting materials (and optionally further portions of starting materials) are preferably substantially identical in composition, except for the tastant.

Emulsifiers, enzymes and redox substances, but for instance also the level of microbiological active species such as yeast, can be used to fine tune the morphology and/or rheological properties of the different regions obtained in the food product by performing the method of the invention (see also below).

Hence, each respective portion is able to be used as starting material to make the food product, but the respective portions differ in tastant weight percentage, and may further optionally differ in relative amounts of the starting materials (components) relative to each other and may further optionally differ with respect to less essential or non-essential components such as one or more selected from the group consisting of flavours, aromas, colouring agents, seasonings, preservation agents, anti-bacterials, emulsifiers, enzymes, redox substances, and yeast. Hence, in an embodiment, especially with bread as food product, bread flavours, spices, or herbs, may also be distributed inhomogeneously.

It is preferred that the protein, carbohydrate, and/or the fat weight percentage is substantially the same for the two portions. Further, it is especially preferred that the protein, carbohydrate, and/or fat composition in the two portions is substantially the same. Hence, the first and the second portions (and optionally further portions) preferably have substantially the same macro-nutrient composition.

Macro nutrients can be defined as nutrients that the body uses in relatively large amounts: proteins, carbohydrates, and fats. This is as opposed to micronutrients, which the body requires in smaller amounts, such as vitamins and minerals. Carbohydrates are for instance polysaccharides such as starch. Preferably, the polysaccharide is selected from the group consisting of a gum and a starch. Herein, optionally the starch may be modified.

It is especially preferred that the protein, starch, and/or the fat weight percentage is substantially the same for the two portions. Further, it is especially preferred that the protein, starch, and/or fat composition in the two portions is substantially the same. This may especially apply to dough products.

Therefore, preferably the type of one or more of the protein, carbohydrate (such as starch) and fat are substantially the same for the first and the second portions (and optionally also for further portions). Even more preferably, the weight percentages of protein, carbohydrate and fat are substantially the same.

The phrase "the first portion of starting materials for making the food product" and "second portion of starting materials for making the food product" are substantially identical with respect to composition (i.e. starting material(s) or components (other than the tastant(s))) included in the respective portion" may especially indicate that the relative amounts of the components in the respective portions (except for the tastant) are substantially the same.

Preferably, the composition (defined as sum of weight percentage(s) of the component(s)) of the first portion and the composition (defined as sum of weight percentage(s) of the component(s)) of the second portion, are substantially the same, preferably are identical for at least 80 wt.%, preferably at least 90 wt.%, even more preferably at least 95 wt.% ("identicality weight percentage"). For instance, assuming some first and second portions having the following compositions, the % the compositions are identical are as follows (the first portion is used as reference):

| | Bread-like example | | |
|---|---|---|---|
| | 1^{st} (wt%) | 2^{nd} (wt%) | ID¹ wt. % |
| Carbohydrate | 50 | 51.5 | 50 |
| Protein | 15 | 15 | 15 |
| Fat | 3 | 3 | 3 |
| Tastant | 2 | 0.5 | 0.5 |
| Others² | 30 | 30 | 30 |
| Total | 100 | 100 | |
| ID wt.%¹ | | | ≥ 98.5 |

| | | | |
|---|---|---|---|
| 1: percentage identical or identicality weight percentage (ID wt.%) 2: such as water; if there are more than one other components, the calculation may be performed for each component (such as, by way of example, for water, flavours, aromas, colouring agents, and seasonings) | | | |

Optional others may be included in the identicality determination. The identicality wt.% is over 90 wt.%, or even over 95 wt.%%.. Thus, the for the respective components, the overlapping weight percentages are determined, and are added to provide the identicality weight percentage.

The term "except for the tastant" in relation to "substantial the same composition" may especially indicate that the composition (defined as sum of weight percentage(s) of the component(s)) of the first portion, including the tastant, and the composition (defined as sum of weight percentage(s) of the component(s)) of the second portion, including the tastant, are substantially the same, and are preferably identical for at least 80 wt.%, preferably at least 90 wt.%, even more preferably at least 95 wt.% ("identicality weight percentage").

The terms "first portion of starting materials for making the food product" and "second portion of starting materials for making the food product" do not exclude the use of other portions, and may also include the use of a plurality of substantially identical first portions and/or a plurality of substantially identical second portions. Preferably however, the number of first portions and second portions is limited. Even more preferably, there is only one first portion and one second portion of starting materials, and those portions are combined.

The first portion of starting materials for making the food product and the second portion of starting materials for making the food product differ at least in that the second portion tastant weight percentage is in the range of about 0-75 % of the first portion tastant weight percentage, especially in the range of about 10-75 %. Hence, the second portion may not include the tastant or may include the tastant in a tastant weight percentage in the order of up to about 75% of the first portion tastant weight percentage, especially in the order of up to about 50%. In this way, the difference in tastant level may be substantial enough to obtain for instance the effect that the bulk weight percentage of the tastant may be decreased, while maintaining the same subjective tastant (weight percentage) perception. Hence, the tastant may optionally be present in the second portion of starting materials. For a favourable overall taste perception, the tastant may be contained in both the first and the second portion of starting materials. Further, advantageously, having the tastant in both portions may also be favourable for the processing conditions/textural properties/rheological behaviour of the portions.

Preferably, the second portion tastant weight percentage is in the range of about 0-40 % of the first portion tastant weight percentage, more preferably in the range of about 0-25 % of the first portion tastant weight percentage. In a further embodiment, the tastant weight percentage in the second portion is at least 10 % of the tastant weight percentage of the first portion. The indication x% of the first portion weight percentage indicates for instance that the weight percentage of the tastant in the first portion is about 3 wt.% and in the second portion about 1.5 % wt% (when x% is 50%), or that the weight percentage of the tastant in the first portion is about 10 wt.% and in the second portion about 2 % wt% (when x% is 20%).

The first portion tastant weight percentage and the second portion tastant weight percentage, and optionally other (or "third") portion tastant weight percentages, may be selected to obtain the desired first bulk region tastant weight percentage, second bulk tastant weight percentage, and optionally other bulk region tastant weight percentages, respectively, and the tastant bulk weight percentage of the food product. More especially, the respective first portion tastant weight percentages of one or more first portions of starting materials and the respective second portion tastant weight percentages of one or more second portions of starting materials, and optionally one or more other (or "third") portion tastant weight percentages of one or more other portions (of starting materials), respectively, may be selected to obtain the desired one or more first bulk region tastant weight percentage of the one or more first bulk regions, respectively, second bulk tastant weight percentages of the one or more second bulk regions, respectively, and optionally one or more other bulk region tastant weight percentages of one or more other bulk regions, respectively, and the tastant bulk weight percentage of the food product.

A tastant may be defined as any substance, e.g. salt, capable of eliciting gustatory excitation, i.e. stimulating the sense of taste. A tastant preferably has no noticeable smell. The term "tastant" is known to the person skilled in the art. The tastant in the invention may especially comprises one or more tastants selected from the group consisting of bitter, sweet, sour, salty and umami tastants, more especially selected from the group consisting of sugars, sweeteners, salts (including mixes of salts), taste potentiators and acidulants.

The sweet tastant may especially comprise a sugar and/or a sweetener. The umami tastant especially comprises a taste potentiator. The salty tastant especially comprises a salt. The sour tastant especially comprises an acidulant.

In an embodiments, the sweet tastant may be selected from the group consisting of one or more sugars including but not limited to sucrose, glucose, fructose, one or more monosaccharides, one or more disaccharides, syrups, one or more molasses and one or more fruit sugars, one or more sweeteners including but not limited to acesulfame potassium, alitame, aspartame, cyclamate, glycyrrhizin, neotame, perillartine, saccharin and sucralose.

The salty tastant may in an embodiment include one or more salts including but not limited to sodium chloride, potassium chloride, one or more other alkali metal-halogen salts, one or more other earth alkali metal-halogen salts, one or more other alkali metal-phosphate salts, one or more other earth alkali metal-phosphate salts. The salty tastant may especially comprise NaCl and/or KCl, especially NaCl (especially kitchen salt). Optionally, the salty tastant may also comprise a salt replacer such as CaCl₂. A salt replacer is herein defined as a compound that is used to at least partially replace NaCl in a food product (as salty tastant).

The taste potentiator may for instance comprise one or more compounds or compositions selected from the group consisting of yeast extracts, glutamic acid (such as mono sodium glutamate (MSG)), salts of inosinic acid, guanylic acid, adenylic acid, uridylic acid cytidylic acid. Taste potentiators are for instance also listed in WO/2006/127935.

The sour tastant comprises in an embodiment one or more acidulants (food acids such as acetic acid, citric acid, lactic acid, phosphoric acid, hydrochloric acid, tartaric acid, maleic acid, and propionic acid), etc. Fumaric acid is preferably not used as tastant.

The bitter tastant may be defined herein as a compound or molecular complex that induces, in a subject, the perception of a bitter taste. In particular, a bitter tastant is one which results in the activation of gustducin and/or transducin. Examples of bitter tastants include but are not limited to denatonium benzoate ("denatonium"; also "DEN"), quinine hydrochloride ("quinine"; also "QUI"), strychnine hydrochloride ("strychnine"; also "STR"), nicotine hemisulfate ("nicotine"; also "NIC"), atropine hydrochloride ("atropine"; also "ATR"), sparteine, naringin, caffeic acid ("caffeine"; also "CAF"), quinacrine, and epicatechin.

The kokumi tastant is also sometimes indicated as heartiness tastant, but has also been described variously as continuity, mouthfulness, mouthfeel, and thickness. Kokumi can be used to give a 'mature' cheese taste, to enhance vegetable flavours, to enhance meat flavour giving fullness and longer lasting taste, to round out acid notes of for instance mayonnaise & dressings, to reduce sodium level of foods, to give a similar fullness to full-fat products while reducing oil-content, etc. Examples of kokumi tastants are for instance certain glycopeptides and peptides which provide a kokumi taste imparting function, such as for instance mentioned in US20060083847, US2008248175 or WO2007055393.

In an embodiment, at least 10 wt.%, more preferably at least 50 wt%, most preferably at least 70, 80, 90, 95, or 100 wt.% of the tastant comprised by the first portion of starting materials for making the food product is provided *as is,* preferably without a tastant coating or tastant particle coating. Additionally or alternatively, preferably at least 10 wt.%, more preferably at least 50 wt%, most preferably at least 70, 80, 90, 95, or 100 wt.% of the tastant comprised by the second portion for making the food product is provided *as is,* preferably without a tastant coating or tastant particle coating. Herein, said coating may essentially consist of one or more materials selected from the group consisting of fatty acids and mono-, di- and triglycerides. The thickness of said coating is preferably less than 1 mm, even more preferably less than 0.1 mm, most preferably less than 0.01 mm. The presence of a tastant coating or tastant particle coating may be less preferred because it may take up formulation space.

Especially in case the tastant may influence process (b.) of the method, in particular when the tastant may have a material effect upon the development of the food product during its preparation, it may be preferred that the first portion of starting materials and the second portion of starting materials comprise a concentration of a free tastant which is about the same between said portions, and wherein the remaining amount of tastant comprised by the first portion of starting materials is provided as a protected tastant. Herein, the term "free tastant" refers to the tastant *as is,* preferably to the tastant in the absence of a tastant coating or tastant particle coating, wherein said coating preferably consists of one or more materials selected from the group consisting of fatty acids and mono-, di- and triglycerides; the thickness of said coating preferably being less than 1 mm, even more preferably less than 0.1 mm, most preferably less than 0.01 mm; the term "protected tastant" refers to the tastant in the presence of a tastant coating or tastant particle coating, wherein said coating preferably consists of one or more materials selected from the group consisting of fatty acids and mono-, di- and triglycerides; the thickness of said coating preferably being less than 1 mm, even more preferably less than 0.1 mm, most preferably less than 0.01 mm; the term "about the same" means that free tastant weight percentage in the two portions are equal within a margin of 10%.In case more than one tastant is applied, preferably at least one tastant has the herein indicated tastant weight percentage difference between the first and the second portion of starting materials. To obtain for each tastant the desired effect, each tastant individually has independently the herein indicated tastant weight percentage difference between the (first and the second) portion(s).

In a specific embodiment, the weight ratio of the first portion and the second portion of starting materials for making the food product is in the range of about 0.01-100, especially about 0.1-10, more especially 0.5-2. When a plurality of first and/or second portions is applied, the weight ratio of the sum of the first portion(s) and the second portion(s) for making the food product is in the range of about 0.01-100, especially about 0.1-10, more especially 0.5-2. In a specific embodiment, the first and the second portion are combined in a weight ratio in the range of 1:20-20:1.

The first and the second portion (and optionally other portions) are combined. In general this may comprise (gentle) mixing, (gentle) kneading, folding, plaiting, laminating, compounding, extruding, coextruding, injection moulding, or other methods known in the art.

The portions are in general combined as solids, semi-solids or as (viscous) liquids. Also a combination of liquid portion (be it a first or a second portion) and a solid portion (be it a second or a first portion) may be possible. In a preferred embodiment, when using a liquid, the portion has a yield stress in the range of about 0.1-10000 Pa, especially about 0.1-1000 Pa, preferably in the range of about 1-100 at 20°C. The yield stress can be determined according for instance the method described in EP1214887. Further, in a preferred embodiment, when using a liquid, the portion preferably has a viscosity in the range of about 10²- 10⁶ mPa.s at 20°C, preferably in the range of about 10³ - 10⁶ mPa.s. A solid food product may in an embodiment have a viscosity larger than about 10⁶ mPa.s at 20 °C. These viscosities may be obtained at a shear rate of about 10 s⁻¹.

Further, in an embodiment, when using two (or more) liquids, the liquids may be substantially miscible or substantially immiscible liquids. An advantage of using substantially immiscible liquids is that tastant diffusion may be limited.

Herein, the term "immiscibility" may relate to kinetic immiscibility of two or more liquids, which is the case if, for example, at least one and preferably each of the liquids has a yield stress within the above-mentioned region. Immiscibility may also relate to thermodynamic immiscibility, in the sense that they are substantially incompatible with each other, for example due to differences in solubility parameters. An example of thermodynamic immiscibility of two liquids relates to the case wherein the first liquid is water and the second liquid is an oil, for example sunflower oil.

The phrase "preparing the food product" may be directed to different embodiments. For instance, it may include rising and proving of a dough, it may (further) include (pre-)baking of such dough, frying of such dough, cooking of such dough, etc. It may further comprise (additional) actions known to the person skilled in the art like packaging the thus obtained food product, coating the thus obtained, etc.

In a specific embodiment, both the first and the second portion(s) of starting materials comprise dough, wherein the tastant comprises salt, and wherein preparing the food product comprises baking, cooking or frying the combined doughs. The doughs may be combined before proving or after proving. Here, the first portion(s) of starting materials, i.e. the (first) dough may have a first portion tastant weight percentage in the range of about 0.1-3, especially 0.5-2 wt.%, relative to the dough. This weight percentage, and the weight percentage of the second portion(s) and optionally other portions, may be selected to obtain the desired bulk region weight percentage of the respective regions in the food product, as well as the tastant bulk weight percentage.

Dough may for instance comprise water, a flour, and/or a starch, wherein the flour is preferably one or more flours selected from the group of wheat flour, maize flour, potato flour).

Hence, by combining the first portion of starting materials for making the food product and the second portion of starting materials for making the food product, and preparing the food product, the food product with the inhomogeneous tastant bulk distribution according to the invention may be obtained.

It is especially desired that the consumer does not perceive sensory contrast when consuming the food product. Hence, the first portion(s) and the second portion(s) and optionally the further portions are preferably processed in such a way that discrete first and second, and optionally further, regions are obtained, which allow a reduction in the bulk tastant weight percentage, but consumer does not perceive sensory contrast when consuming the food product. For instance, this can be obtained by alternating regions (for instance by making a laminate of the portions and then further making the food product).

### Food product

The invention further provides in an aspect a food product comprising a tastant, the food product having a tastant bulk weight percentage and an inhomogeneous tastant bulk distribution. Such food product may be obtainable with the method according to the invention.

Hence, in yet a further aspect, the invention provides in an embodiment a flour-based bakery product comprising at least two distinct flour-based bulk regions, including: (a) 5-95% by weight of the bakery product of a first flour-based bulk region ("first bulk region") comprising 0.05-15% of a tastant by weight of said first bulk region, said tastant preferably being selected from the above defined tastants, yet even more preferably from the group consisting of a sugar, a sweetener, a salt, a taste potentiator and an acidulant; and (b) 5-95% by weight of the bakery product of another, second flour-based bulk region ("second bulk region") not containing said tastant or containing said tastant in a weight percentage that is preferably equal to or less than 50% of the weight percentage of the same tastant in the first flour-based bulk region; wherein the first flour-based bulk region and the second flour-based bulk region together represent at least 30 wt.%, preferably at least 60 wt.% of the bakery product.

The phrase "first flour-based bulk region comprising 0.05-15% of a tastant by weight of said first bulk region" especially indicates that the first bulk region tastant weight percentage is 0.05-15 wt.%. Likewise, the phrase "second flour-based bulk region ("second bulk region") not containing said tastant or containing said tastant in a weight percentage that is equal to or less than 50% of the weight percentage of the same tastant in the first flour-based bulk region" especially indicates that the second bulk region tastant weight percentage is preferably 50% or less of the first bulk region tastant weight percentage.

Preferably, the composition of the first flour-based bulk region defined in percentage by weight and the composition of the second flour-based bulk region defined in percentage by weight are at least 90 wt.%, preferably at least 95 wt.% identical (i.e. ID percentage) (see also above).

In a specific embodiment, the first flour-based bulk region is comprised in the bakery product in the form of layers having a thickness of 1-60 mm, such as 2-50 mm, like 2-30 mm or of (other type of) discrete regions having a volume of 1 mm³-1000 cm³ (see also above). Preferably, the discrete regions have an aspect ratio of less than 30, preferably of less than 10. In an embodiment of the bakery product, the first flour-based bulk region and the second flour-based bulk region together form a lamellar composite.

Preferably, the weight ratio of the first bulk region and the second bulk region is in the range of 1:10 to 10:1. Especially, the bakery product is a dough, a par-baked dough product or a fully baked dough product. Further, the bakery product may be selected from the group consisting of bread, baked pastry products, pretzels, crackers, a cookie, and a biscuit. Especially, the bakery product may be a bread, preferably tin bread. Herein, the term "par-baked dough product especially refers to a partially baked (i.e. cooked) dough product which is after partially baking rapidly frozen for storage.

In a specific embodiment, the second flour-based bulk region contains the tastant in a weight percentage that is 4-40%, preferably 4-20% of the weight percentage of the same tastant in the first flour-based bulk region. Especially, the bakery product contains 0.1-3 wt.%, preferably 0.5-2 wt.% of the tastant. In an embodiment, both the first flour-based bulk region and the second flour-based bulk region contain 35-80 wt.% of flour, relative to the total weight of the first flour-based bulk region and the second flour-based bulk region, respectively. The fat contents of the first flour-based bulk region and the second flour-based bulk region differ by no more than 30%, preferably by no more than 15%, preferably even less. As mentioned above, preferably the tastant is sodium chloride. However, in an embodiment, the tastant is a sugar selected from sucrose, glucose and fructose. Note that the weight percentages of more than one tastant may be varied. In the invention, at least one tastant is inhomogeneously varied, but if one or more other tastants are present, also one or more of these tastants may be varied. For instance, NaCl may be distributed inhomogeneously, whereas at the same time KCl is homogenously distributed.

In a further aspect, the invention provides a food product comprising
a. a first bulk region (also indicated as "first region") comprising the tastant, the first bulk region having a first bulk region tastant weight percentage; and
b. a second bulk region (also indicated as "second region") optionally comprising the tastant, the second bulk region having a second bulk region tastant weight percentage.

The food product is especially a bakery product (see also above), such as a dough, a par-baked dough product or a fully baked dough product. Therefore, the first bulk region (or first region), is especially a (first) flour-based bulk region, such as a (first) dough bulk region; likewise, the second bulk region (or second region), is especially a (second) flour-based bulk region, such as a (second) dough bulk region.

Thus, the food product according to an embodiment of the invention comprises at least a first bulk region and a second bulk region, although in a further embodiment more regions may be present. The term "bulk region" refers to partitions in the bulk and thus does especially not refer to coatings. The term "bulk" may be interpreted as anything in the food product at a distance of about 0.2 mm, more especially at a distance of about 0.5 mm from the surface of the food product. Especially, the top or outer layer or surface of the product is not considered as bulk, although of course a bulk region may extend to the surface of the product.

The first and the second bulk region have different weight percentages of the tastant. Especially, the second bulk region tastant weight percentage is in the range of 0-75 % of the first bulk region tastant weight percentage, especially in the range of about 10-75 % (see also above). Hence, the second region may not include the tastant or may include the tastant in a tastant weight percentage in the order of up to about 75% of the first region tastant weight percentage, especially in the order of up to about 50%. In this way, the difference in tastant level may be substantial enough to obtain for instance the effect that the bulk weight percentage of the tastant may be decreased, while maintaining the same subjective tastant (weight percentage) perception. Hence, the tastant may optionally be present in the second region.

Preferably, the second bulk region tastant weight percentage is in the range of about 0-40 % of the first bulk region tastant weight percentage, more preferably in the range of about 0-20 % of the first bulk region tastant weight percentage. In a further embodiment, the bulk region tastant weight percentage in the second region is at least 10 % of the bulk region tastant weight percentage of the first region. The indication x% of the first bulk region tastant weight percentage indicates for instance that the bulk region tastant weight percentage of the tastant in the first bulk region is about 3 wt.% and in the second bulk region about 1.5% wt.% (when x is 50).

In this way, the tastant is distributed inhomogeneously in the food product. Note however that within the region, the (local) tastant weight percentage may not vary to large extents. Especially, local weight percentages of the tastant within the bulk region may not differ much from the bulk region tastant weight percentage. In general, the local tastant weight percentage within the first bulk region is within about +/- 20%, especially within about +/- 10%, more especially within about 5% of the first bulk region tastant weight percentage. For instance, assuming a first bulk region tastant weight percentage of 2 wt.%, local variations within the first bulk region will be in the range of about 1.6-2.4 wt.% (assuming +/-20%), especially within about 1.9-2.1 wt.% (assuming +/- 10%), etc.

The local variations within the second bulk region of the second bulk region tastant weight percentage may then also be within about +/- 20%, especially within about +/- 10%, more especially within about 5% of the first bulk region tastant weight percentage, respectively, with a minimum of 0 wt.% of course. Hence, assuming first bulk region tastant weight percentage of 2 wt.% (see example above), a second bulk region tastant weight percentage of 50% of the first bulk region tastant weight percentage, i.e. 1 wt.%, the local variation, within the second bulk region will be in the range of about 0.6-1.4 wt.% (assuming +/- 20%). especially within about 0.9-1.1 wt.% (assuming +/- 10%), etc. Further, assuming a second bulk region tastant weight percentage of 0% of the first bulk region tastant weight percentage, i.e. 0 wt.%, the local variations within the first bulk region will be in the range of about 0-0.4 wt.% (assuming +/- 20%), especially within about 0-0.1 wt.% (assuming +/-10%). etc. Such first bulk region and such second bulk region each independently may have a volume of at least about 1 mm³, more especially at least about 1 cm³, such as for instance about 0.5-1000 cm³, such as 0.5-100 cm³, more especially 1-10 cm³. Smaller volumes may also be possible, such as 0.5-5 cm³ or 0.5-2 cm³ (see also below). Note that in case there is more than one first bulk region and/or more than one second bulk region, each (first or second) bulk region separately and independently may, in specific embodiments, have a volume in the ranges as indicated herein. Hence, the first bulk region(s) and second bulk region(a) (and thus optionally also further bulk region(s) each independently may have a volume of 1 mm³ - 1000 cm³, such as 0.5-1000 cm³, especially 1-1000 cm³, such as 0.5-500 cm³, preferably 0.5-100 cm³, especially 0.5-20 cm³, such as preferablyl-10 cm³. For instance, in bread, the regions may for instance be in the range of 10-40 cm³, such as 15-25 cm³.

Hence, in a specific embodiment, the invention provides a food product comprising a tastant, the food product having a tastant bulk weight percentage and an inhomogeneous tastant bulk distribution, wherein the food product comprises:
a. a first bulk region comprising the tastant, the first bulk region having a first bulk region tastant weight percentage; and
b. a second bulk region optionally comprising the tastant, the second bulk region having a second bulk region tastant weight percentage,
wherein the first bulk region has a substantially homogeneous tastant bulk distribution, or wherein the second bulk region has a substantially homogeneous tastant bulk distribution, or wherein both the first bulk region and the second bulk region have independently a substantial homogeneous tastant bulk distribution.

In an embodiment, the first bulk region and the second bulk region each independently have a volume of at least about 1 mm³, more especially at least about 1 cm³.

The first region or the second region will in an embodiment not consist of only the tastant(s), but comprise also other ingredients or components. Hence, the tastant weight percentage in the first and in the second region will in general independently be lower than about 90 wt.%, and in case of non-sweet tastants, especially independently below about 50 wt.%, even more especially below about 30 wt.%, yet even more especially below about 10 wt.%, even more especially below about 5 wt.%, relative to the weight first or second region, respectively. When more than one tastant is present in the first or the second region, these numbers may apply to the sum of the weight percentage of the tastants in the first and the second region, respectively. Note that the terms first and second are only a matter of indication and may for instance differ per tastant.

As mentioned above, the tastant may include combinations of two or more tastants, including combinations of different tastants within the same tastant category, such as a mixture of salts. The distribution of the tastants may be independent of each other. For instance, inhomogeneous food products may include food products with a high weight percentage (first) tastant region with a taste potentiator and a low weight percentage (second) tastant region without potentiator, but also the reverse, i.e. a high weight percentage tastant (first) region with no taste potentiator and a low weight percentage tastant (second) region with a high taste potentiator weight percentage (note that in this example, when seen from the perspective of the taste potentiator, the latter region may be considered a first region and the former region a second region).

In a specific embodiment, the "first region" and "second region" are substantially identical with respect to composition (i.e. ingredients (or components) included in the respective region. Where more than ingredient (or component) is contained in the region preferably also the relative amounts of those ingredients (or components) in the respective regions), are substantially identical.

In a further embodiment, the "first bulk region" and "second bulk region" are substantially identical with respect to composition except for the tastant, and optionally except for one or more of the ingredients (or components) selected from the group consisting of flavours, aromas, colouring agents, and seasonings, and optionally except for one or more of the starting materials selected from preservation agents and anti-bacterials, and optionally except for one or more of the starting materials selected from the group consisting of emulsifiers, enzymes and redox substances (see also above). Hence, the first bulk region and the second bulk region (and optionally further bulk regions) are substantially identical in composition, except for the tastant.

Hence, each respective region may further optionally differ in relative amounts of the ingredients (components) relative to each other and may further optionally differ with respect to less essential or non-essential components such as one or more selected from the group consisting of flavours, aromas, colouring agents, seasonings, preservation agents, anti-bacterials, emulsifiers, enzymes, redox substances, and yeast. Hence, in an embodiment, especially with bread as food product, bread flavours, spices, or herbs, may also be distributed inhomogeneously.

It is preferred that the protein, carbohydrate, and/or the fat weight percentage is substantially the same for the two regions. Further, it is especially preferred that the protein, carbohydrate, and/or fat composition in the two regions is substantially the same. Hence, the first and the second regions (and optionally further regions) preferably have substantially the same macro-nutrient composition. It is especially preferred that the protein, starch, and/or the fat weight percentage is substantially the same for the two regions. Further, it is especially preferred that the protein, starch, and/or fat composition in the two regions is substantially the same. This may especially apply to dough products.

Therefore, preferably the type of one or more of the protein, carbohydrate (such as starch) and fat are substantially the same for the first and the second regions (and optionally also for further regions). Even more preferably, the weight percentages of protein, carbohydrate and fat are substantially the same.

Advantageously, the distribution of one or more macro nutrients is thus substantially homogenous in the (bulk of the) food product.

The phrase "the "first region" and "second region" are substantially identical with respect to composition (i.e. ingredients (or components) included in the respective regions" may especially indicate that the relative amounts of the components in the respective regions (except for the tastant) are substantially the same. Preferably, the composition defined in weight percentages of the first region and the composition defined in weight percentage of the second region are substantially the same, preferably are identical for at least 80%, preferably at least 90 %, even more preferably at least 95%. It is further referred to the above table, wherein "1^{st} (wt%)" and "2^{nd} (wt%)" may relate to the weight percentage of the components in the first and second regions, respectively, but may also be interpreted as the weight percentages of the components in the first and second regions, respectively.

The invention may thus provide a food product that is essentially homogeneous with respect to the components (or ingredients), especially except for the tastant. If desired, also some other components (such as a flavour or an emulsifier) may be distributed inhomogeneously, but preferably, the macro nutrients are distributed homogeneously.

Therefore, the invention also provides in an embodiment a food product comprising a tastant, the food product having a tastant bulk weight percentage and an inhomogeneous tastant bulk distribution, wherein the food product comprises a first bulk region comprising the tastant, the first bulk region having a first bulk region tastant weight percentage, and a second bulk region optionally comprising the tastant, the second bulk region having a second bulk region tastant weight percentage, wherein the second bulk region tastant weight percentage is in the range of 0-75 % of the first bulk region tastant weight percentage, and wherein the first bulk region and the second bulk region each independently have a volume of at least 1 mm³, respectively, and wherein the food product is essentially homogeneous with respect to the components, except for the tastant.

Further, in an embodiment, the invention provides a food product comprising a tastant, wherein the tastant is inhomogeneously distributed in the bulk of the food product, wherein the food product comprises a first bulk region and a second bulk region, wherein the first bulk region comprises the tastant with a first weight percentage relative to the first bulk region, wherein the second bulk region optionally comprises the tastant with a weight percentage relative to the second bulk region, wherein the second bulk region comprises the tastant with a second weight percentage in the range of 0-75% of the first weight percentage of the tastant in the first bulk region, and wherein the first bulk region and the second bulk region each independently have a volume of at least 1 mm³, and wherein the food product is essentially homogeneous with respect to the components, except for the tastant.

As will be clear to the person skilled in the art, differences in compositions with respect to tastants and other ingredients or components, may be obtained by using portions with different compositions of starting materials and making a food product thereof.

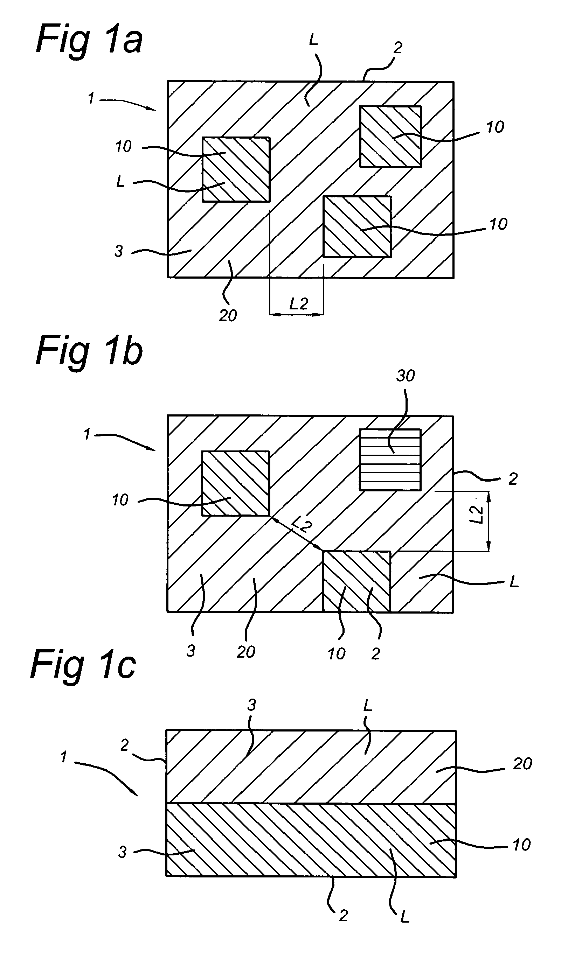

Referring to figure 1a, the food product is indicated with reference 1. The food product has a surface 2 and the bulk of the food product 1 is indicated with reference 3. The food product 1 has a first bulk region 10. Actually, in the schematic drawing of figure 1a, the food product 1 has 3 regions that qualify as first bulk regions 10, respectively. The food product 1 also comprises a second bulk region 20. The weight percentage of the tastant is different for the different regions. The first bulk regions 10 have a higher bulk region tastant weight percentage and the second bulk region 20 has a lower bulk region tastant weight percentage. The difference is indicated with the different shadings of the regions 10, 20.

Since the terms "first bulk region" or "second bulk region", etc., may also refer to a plurality of first bulk regions or second bulk regions, respectively, more than one first and/or second bulk regions may be present. In the figure 1a, this is indicated by way of example with the three first bulk regions 10. Note however that each first bulk region 10 or second bulk region 20 independently may have a volume of at least 1 mm³ see above. Figure 1a schematically depicts discrete regions (i.e. especially the first bulk regions 10).

Especially, inhomogeneities in the tastant content over length scales in the range of millimetres may provide the desired effect. A shortest distance L2 between two bulk regions of the same type, such as two first bulk regions 10 in figure 1a, measured through the intermediate bulk region of another type, which is here second bulk region 20, is preferably in the range of 0.5-100 mm, such as especially 1-50 mm, like 1-20 mm.

As mentioned above, the term "first bulk region 10" may refer to a plurality of first bulk regions 10 (likewise this may apply to the term "second bulk region 20"). In the schematic embodiment of figure 1a, the food product 1 comprises a plurality of first bulk regions 10, here by way of example embedded in the second bulk region 20. In this schematic embodiment, the first bulk region 10 (i.e. the plurality of first bulk regions 10) and the second bulk region 20 together represent more than 90 wt.% of the food product 1 (here in fact substantially 100 wt.%). Figure 1a thus schematically depicts a flour-based bakery product, such as in this figure for instance a bread, comprising at least two distinct flour-based bulk regions. Here, three first bulk regions 10 are present (as mentioned above, the terms "first flour based bulk region" and "second flour based bulk region", may also refer to pluralities of first or second bulk regions respectively). The bakery product comprises about 5-95% by weight of the bakery product of the first flour-based bulk regions 10 comprising 0.05-15% of a tastant by weight of said first bulk regions, said tastant being selected from the group consisting of a sugar, a sweetener, a salt, a taste potentiator and an acidulant. Further, the flour-based bakery product comprises 5-95% by weight of the bakery product of another, second flour-based bulk region 20 not containing said tastant or containing said tastant in a weight percentage that is equal to or less than 50% of the weight percentage of the same tastant in the first flour-based bulk region. The first flour-based bulk region and the second flour-based bulk region together represent at least 30 wt.%, preferably at least 60 wt.% of the bakery product. Here, in this schematic embodiment, the first and the second bulk regions represent about 100 wt.% of the flour-based bakery product.

Hence, the food product according to embodiments of the invention may have one or more first bulk regions and one or more second bulk regions.

However, the presence of the first and the second bulk region(s) does not exclude the possible presence of other bulk regions. This is schematically indicated in figure 1b.

Referring to figure 1b, the food product is again indicated with reference 1. The food product 1 has two first bulk regions 10 and also comprises second bulk region 20. Further however, the food product 1 also comprises a third bulk region 30, indicated with again different shading. The third bulk region 30 does not necessarily qualify as first or second bulk region, but could do so. Further, while the first bulk region 10 and the second bulk region 20 qualify with respect to each other as first and second bulk region, respectively, for instance the third and the first bulk region may for instance again qualify as first and second bulk region with respect to each other. The terms "first" and "second" (and "third") have no specific meaning than to distinguish between different bulk regions.

The bulk regions may together represent for instance more than 30 wt.%, preferably more than 60 wt.%, even more preferably at least 90 wt.% of the food product 1. In this schematic embodiment of figure 1b, the first bulk region 10 (i.e. the plurality of first bulk regions 10), the second bulk region 20, and the third bulk region 30 together represent more than 90 wt.% of the food product (here in fact substantially 100 wt.%).

In another embodiment, the food product 1 of the invention may comprise layers. Such embodiment is schematically indicated in figure 1c, wherein two layers are shown, one layer being the first bulk region 10 and the other layer being the second bulk region 20. Hence, the first and second bulk regions 10, 20 may have any obtainable form. In an embodiment, the food product 1 is a layered product comprising a first layer comprising the first bulk region 10 and a second layer comprising the second bulk region 20. In Figure 1c, the food product 1 essentially consists of the first bulk region 10 and the second bulk region 20. As will be clear to the person skilled in the art, more than 2 layers may also be applied, for instance a stack of alternating layers of first and second regions, for instance 2-20 layers, such as 4-10 layers. Figure 1c schematically depicts in essence a lamellar composite.

Referring to figure 1c, this figure may for instance relate to a lamellar dough or a lamellar bread.

Assuming a lamellar dough, the dough layers may have a thickness of 1-30 mm, like 1-10 mm. Further, the composite may comprise layers comprising a lower tastant content and layers comprising a higher tastant content, wherein these layers alternate.

Assuming a lamellar bread, the bread layers may have a thickness of 1-60 mm, like 1.5-25 mm. Further, the composite may comprise layers comprising a lower tastant content and layers comprising a higher tastant content, wherein these layers alternate.

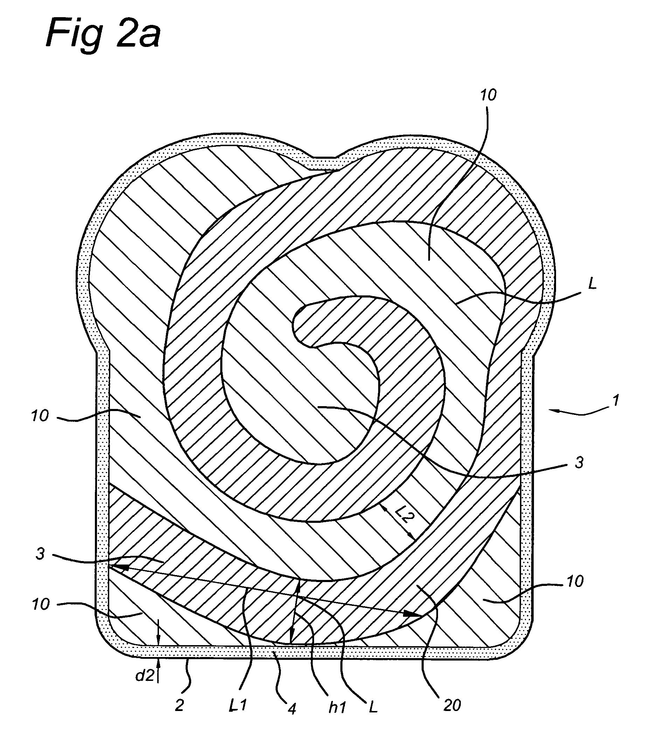

As indicated above, in a specific embodiment each of the first bulk region(s) and second bulk region(s) have a volume of at least about 1 mm³, more especially at least about 1 cm³. In a further specific embodiment, the first bulk region, or the second bulk region, or both the first bulk region and the second bulk region have a region location where the length, the height and depth of the region at that location are each independently at least about 0.5 mm, more especially each independently at least about 1 mm. Referring to figures 1a-1c (and also figures 2a-2b, see below), non-limiting examples of such locations are indicated with the reference L. Note that the locations are indicated with one reference L, but the locations L are not dependent on each other.

According to this embodiment, within one or more of the bulk regions, locations L can be found, where, when a co-ordinate system would be drawn with a length, height and depth axis perpendicular to each other, with L as origin, the length (which may be indicated as L1) within the bulk region, the height (which may be indicated as h1) within the bulk region and the depth (which may be indicated as d1) within the bulk region are each independently at least about 0.5 mm, more especially each independently at least about 5 mm, even more especially each independently at least about 10 mm. The upper ranges for the length L1, height h1 and depth d1 will in general independently be in the range of about 500 mm, more especially in the range of about 400 mm, even more especially in the range of about 200 mm. Beyond those fictitious cubes at location(s) L, a region of another nature may be found. As mentioned above, the tastant bulk region weight percentage may be substantially constant within the region, i.e. the tastant bulk region distribution may be substantially homogeneous within the (first and/or second) bulk region. Also smaller dimensions are possible, such as with upper ranges for the length L1, height h1 and depth d1 will in general independently be in the range of about 50 mm, more especially in the range of about 40 mm, even more especially in the range of about 20 mm.

In a specific embodiment, the first bulk region and the second bulk region each independently have a volume in the range of about 0.1-1000 cm³, such as preferably 1-1.000 cm³, respectively, such as preferably 0.5-100 cm³. In a specific embodiment of the invention, the first and the second region are adjacent, and especially are partially in contact with each other, In the schematic figures 1a-1c and 2a-2b, all first regions 10 and second regions 20 are adjacent to cach other; there are no intermediate regions 30 that may not qualify as first or as second region.

Note that although there are different regions 10,20, the food product 1 may be perceived as one food product 1, since only the tastant weight percentage may vary throughout the food product, which may in some embodiments not be visible by eye.

In a further embodiment, the food product has a food product volume (i.e. a total food product volume), wherein the first bulk region has a first bulk region volume and the second bulk region has a second bulk region volume, each independently having a volume in the range of equal to or larger than about 1 cm³ and equal to or smaller than about 75 vol.% of the food product volume (or total volume of the food product), respectively, wherein the first bulk region volume and the second bulk region volume together are equal to or smaller than the food product volume. The phrase "wherein the first bulk region volume and the second bulk region volume together are equal to or smaller than the food product volume" indicates that there may be more regions than the first bulk region and the second bulk region. Note that in case there is more than one first bulk region and/or more than one second bulk region, each (first or second) bulk region separately and independently may have a volume in the range of equal to or larger than about 1 cm³ and equal to or smaller than about 75 vol.% of the food product volume, wherein the sum of the first bulk region volume(s) and the sum of the second bulk region volume(s) together may be equal to or smaller than the food product volume. Preferably, the first and the second bulk region volume together provide about 50-100% of the total volume of the food product, preferably at least 60%, yet even more preferably at least 75%.

Further, preferably the first bulk region and the second bulk region together represent at least 30 wt.%, preferably at least 60 wt.%, such as preferably 80 wt.%, yet even more preferably at least 90 wt.% of the food product. In another embodiment, the first bulk region and the second bulk region, and optionally further bulk regions, represent at least 30 wt.%, preferably at least 60 wt.%, such as preferably 80 wt.%, yet even more preferably at least 90 wt.% of the food product.

In another embodiment, the weight ratio of the first bulk region and the second bulk region may be in the range of about 0.01-100, especially about 0.1-10. In case there is more than one first bulk region and/or more than one second bulk region, the weight ratio of the sum of the weight of the first bulk region(s) and the sum of the weight of the second bulk region(s) may be in the range of about 0.01-100, especially 0.05-20, even more especially about 0.1-10.

In a specific embodiment, the food product comprises dough product, more especially a bread, such as a tin bread, wherein the tastant comprises salt, wherein the ratio of the first bulk region tastant weight percentage and second bulk region tastant weight percentage is in the range of about 2-20, and wherein the tastant bulk weight percentage is in the range of about 0.1-3, especially about 0.5-2 wt.%, on dough product base, or bread basis, respectively. In general, the salt bulk weight percentage for a "normal" bread will be in the range of about 1.8 - 2.4 wt.% salt on bread basis (for "normal" pastry the salt bulk weight percentage will be in the range of about 0.8 - 1.2 wt.% on flour base. Hence, the salt bulk weight percentage for such food products according to the invention may be similar or lower, such as about 0.5-2 wt.% on bread basis.

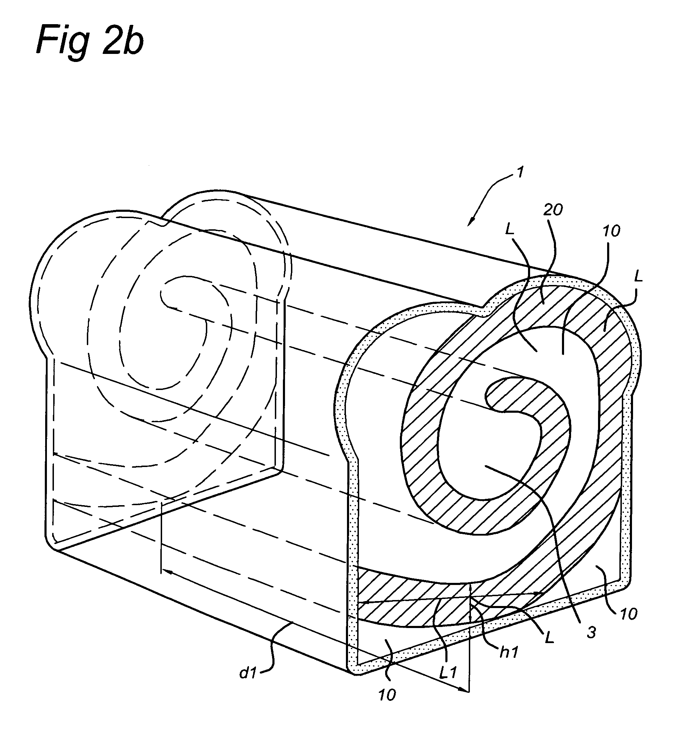

A schematic figure of a slice of bread or a cross section of bread is depicted in figure 2a. Here, such slice of bread or cross section of bread is depicted as food product 1. The food product 1 has a crust 4. Such food product 1 may be obtained by combining different dough sheets (see above; see also example) and moulding such sheets. The crust 4 may have a thickness d2; in general, the crust 4 may not be considered bulk. Hence, the bulk 3 may therefore be at a distance d2 of the surface 2 of about 1-5 mm. A perspective view of a bread as food product 1 is schematically shown in figure 2b. Locations L can be found, where, when a co-ordinate system would be drawn with length L1, height h1 and depth d1 form the coordinate system, perpendicular to each other, these dimensions could independently be at least about 0.5 mm, more especially each independently at least about 5 mm, even more especially each independently at least about 10 mm. In the example of 2b, at the location L where also a coordinate system is shown, L1 may be about 50 mm, h1 may be about 15 mm, and d1 may be about 200 mm. Beyond those fictitious cubes at location(s) L, a region of another nature may be found. As mentioned above, the tastant bulk region weight percentage may be substantially constant within the region, i.e. the tastant bulk region distribution may be substantially homogeneous within the (first and/or second) bulk region(s).

The shortest distance L2 between two bulk regions of the same type, such as between two parts of second bulk region 20 in figure 2a, measured through the intermediate bulk region of another type, which is here first bulk region 10, is preferably in the range of 0.5-100 mm, such as especially 1-50 mm, like preferably 1-20 mm.

As mentioned above, the first bulk region 10, the second bulk region 20, and optionally further bulk regions together represent preferably more than 60 wt.% of the food product (here at least about 90 wt.% (since the crust 4 is not taken into account as bulk).

In a specific embodiment, especially wherein the food product comprises a baked dough product, such as a bread, the total bulk fat and oil content is smaller than 30 wt.%.

Therefore, the invention may advantageously provide the use of an inhomogeneous tastant bulk distribution in a food product for providing a food product with a reduced tastant bulk weight percentage. Further, the invention may also advantageously provide the use of an inhomogeneous tastant bulk distribution in a food product for enhancing and/or improving the sensory perception of the tastant in a food product.

### Further embodiments.

*Note: where appropriate, any of the further embodiments described herebelow may be combined with one or more teachings or embodiments according to the method or the food product as described above. In all further embodiments, the tastant may additionally relate to a taste potentiator.*

*Bread.* In an especially preferred embodiment of the method wherein the first and second portion(s) relate to a dough. The dough may be any dough suitable for making bread. An especially suitable dough is a dough, preferably the dough described hereabove, which (further) comprises yeast. The tastant is preferably a salt, especially sodium chloride; the food product is a bread.

It is preferred that the first portion(s) and the second portion(s) of dough are combined with or following lamination of said portions. Additionally or alternatively, the first portion(s) and the second portion(s) may preferably be combined with or following co-extrusion of said portions. Additionally or alternatively, the first portion(s) and the second portion(s) may preferably be combined with mixing of said portions.

According to an especially preferred embodiment, before combining the portions, each of said portions is subdivided into smaller subportions. These subportions preferably have a volume of at least 1 mm³. It is preferred the first portion(s) and the second portion(s) are combined such that following process (a.) each of said portions may still (distinctly) reside in volumes of at least 1 mm³. Before combining, said portions may be suitably cooled down to a temperature of between 0 and 10 °C, or even frozen. Accordingly, the consistency of said portions may be improved, so that intermixing of said portions may be (further) reduced or prevented.

It has been found that the salt may have a material effect upon proving of a dough comprising yeast. In particular, increasing salt concentrations may negatively influence the speed and/or extent of proving. According to this embodiment, the first portion of starting materials and the second portion of starting materials comprise a concentration of a free salt which is about the same between said portions, and wherein the remaining amount of tastant comprised by the first portion of starting materials is provided as a protected salt. Herein, the term "free salt" refers to the salt *as is,* preferably to the salt in the absence of a salt coating or salt particle coating, wherein said coating, if present, preferably consists of one or more materials selected from the group consisting of fatty acids and mono-, di- and triglycerides; the thickness of said coating preferably being less than 1 mm, even more preferably less than 0.1 mm, most preferably less than 0.01 mm; the term "protected tastant" refers to the salt in the presence of a salt coating or salt particle coating, wherein said coating preferably consists of one or more materials selected from the group consisting of fatty acids and mono-, di- and triglycerides; the thickness of said coating preferably being less than 1 mm, even more preferably less than 0.1 mm, most preferably less than 0.01 mm; the term "about the same" means that free salt weight percentage in the two portions are equal within a margin of 10%. The salt is preferably sodium chloride or potassium chloride or a mixture thereof. The coating is preferably selected as a material which melts temperatures between 10 and 200 °C, more preferably between 20 and 180 °C, most preferably between 40 and 120 °C. The coating preferably comprises a low melt vegetable oil, for example as disclosed in WO0074499. Most preferably, the coating consists of a low melt vegetable oil, for example as disclosed in WO0074499. Accordingly, the salt may not directly contact the yeast during proving conditions (i.e. at a temperature of preferably between 4 and 40 °C) whilst the salt may be liberated during further preparation of the food product, especially during cooking or baking.

After combining the portions, the doughs may for instance be baked or pre-baked in order to prepare (further processing) a pre-baked bread or bread. Alternatively, the combined doughs may be frozen for storage, and later processing.

### Examples

### Example 1: Salt perception in bread

### Experimental set up

Three bread samples were made with about 1.5 wt% salt on flour (basis), but varying in salt distribution:
C) reference bread with a homogeneous salt distribution with 1.0 cm layer thickness of dough with medium/medium salt content (1.5 *wt.%* and 1.5 *wt.*%);
B) inhomogeneous bread with 0.5 cm layer thickness of dough with high/low salt content (2.75 *wt.%* and 0.25 *wt.%);*
A) inhomogeneous bread with 1.0 cm layer thickness of dough with high/low salt content (2.75 *wt.%* and 0.25 *wt.%*).

### Preparation of bread samples

A lean bread recipe was used, composed of Edelweiss flour, tap water, kitchen salt (NaCl) and Fermipan red instant yeast (see table 1.1). Doughs were mixed using Hobart mixers. In this way it was possible to produce multiple doughs with varying salt content at the same time. The 3 bread variations could thus be baked at the same time, allowing comparable sensory testing. Bread with a homogeneous salt distribution is made from dough 1. Breads with heterogeneous salt distribution are 1:1 combinations of dough 2 and 3 (see table 1.1). Thus the average composition of all breads is therefore exactly the same.

**Table 1.1: Dough recipes**

| **Component** | **Dough 1** | **Dough 2** | **Dough 3** |
|---|---|---|---|
| Flour | 1000.0 | 1000.0 | 1000.0 |
| Water | 603.0 | 603.0 | 603.0 |
| Instant yeast | 16.7 | 16.7 | 16.7 |
| NaCl | 15.0 | 2.5 | 27.5 |
| Dough | 1634.7 | 1622.2 | 1647.2 |
| | | | |
| in dough (w/w): | | | |
| Fat % | 0.73 | 0.74 | 0.73 |
| Protein % | 6.58 | 6.63 | 6.53 |
| salt % | 0.92 | 0.15 | 1.67 |

Bread consisting of two dough phases varying in salt concentration was prepared by combining two dough sheets into one bread just before moulding the bread. In all cases the dough sheet with the high salt content was placed outside, inducing a small error in the overall salt content of the crumb. Therefore, the crumb of bread with an inhomogeneous salt distribution contained somewhat less salt.

The doughs containing 1.5 *wt.%* had a final proofing time of 57 min. The breads were baked in closed baking tins. In this way the bread volume is fixed and each slice of bread contained the same overall salt content. The breads were cooled for 1 hour at 20°C before slicing them. Subsequently, half slices of the crumb of the bread were offered to the sensory panel.

### Perceived saltiness

The perceived saltiness of the breads was examined in a randomized, blind ranking test with 5 untrained panellists. A paired comparison test was performed and the panellists were asked to mark which bread was saltier (A:B, B:C, A:C). Samples were offered to the panellists covered, i.e. no visual clues were given to the panellists and dehydration of the samples was prevented. Only the crumb (and not the crust) was evaluated and the panellists were instructed to take large bites of the samples. The results of the sensory test are shown in table 1.2.

**Table 1.2: Results of the sensory test. Each panellist was asked to mark which bread was saltier. A and B are breads with heterogeneous salt distribution and C is bread with a homogeneous salt distribution.**

| | **panellist 1** | **panellist 2** | **panellist 3** | **panellist 4** | **panellist 5** |
|---|---|---|---|---|---|
| **series 1** | | | | | |
| A:B | B | A | B | A | B |
| B:C | B | C | B | B | B |
| A:C | A | C | A | A | A |

The samples with a heterogeneous salt distribution were clearly perceived saltier. From the five panellists, four marked the heterogeneous bread to be saltier.

During preparatory tests the breads were also tasted by people aware of the variation in the samples. The heterogeneous breads were clearly saltier; several peaks of saltiness were perceived during chewing. This phenomenon was also observed after 24 hours of storage and appears to remain after 5 days of frozen storage and 4 hours thawing, indicating that the mobility of the salt is limited and the heterogeneity is remained with time.

### Bread structure

It is well known that the salt content influences the physical properties of bread dough, affecting the bread structure. A paired comparison was done by the sensory panel by means of an open questioning for structural differences of the samples.

All panellists answered that a white spiral was visible in the breads (this is due to the heterogeneous salt distribution). This phenomenon was clearly present for all breads with a heterogeneous salt distribution (see schematic Figures 2a and 2b).

Therefore, the spatial distribution of salt in bread influences the flavour and saltiness perception, more specifically, a heterogeneous distribution of salt in bread seems to increase the perception of saltiness. The invention can be applied in the production of bread with low salt levels without deteriorating the saltiness perception. Likewise, this may apply to other tastants and other food products.

The bread prepared according to an embodiment of the method of the invention may reveal spatial volumes (of larger than about 1 cm³) which are high in salt concentration and volumes which are low in salt concentration. The overall salt concentration of the bread may be significantly lower compared to a bread prepared using standard procedures with a homogeneous salt distribution. The bread prepared according to the invention which exhibits an inhomogeneous distribution of salt may be perceived as saltier than bread prepared according to standard procedure which exhibits a homogeneous distribution of salt at the same salt concentration.

Bread with an inhomogeneous salt distribution can for example be prepared by for instance:
- mixing two dough phases varying in salt concentration following the sheeting process using one dough with a high salt concentration and another dough with a low salt concentration; or
- the "fold in" process where the second dough is added during the final moulding of the dough.

Likewise, this may apply to other tastants.

### Example 2: Salt perception in bread

### Experimental set up

A bread with an inhomogeneous salt distribution was prepared by placing three layers of dough on top of each other into a tin. The salt concentrations within the layers were 0.5% (bottom layer), 3% (middle layer) and 1% (top layer) resulting in an average salt concentration of 1.5% in the final product. The saltiness perception and morphology of the bread with an inhomogeneous salt distribution (1.5% salt) was compared with a bread with a homogeneous salt distribution (2% salt).

Dough recipes are given in the table 3 below. The doughs were prepared using a spiral mixer for 2+6 minutes at 26°C, followed by 5 minutes rest. Doughs were transferred to the tins (600g per tin). For preparation of the inhomogeneous bread, dough sheets of 2 cm thickness were cut according to tin size. 3 layers of dough were placed on top of each other into the tin: from the bottom up into the tin: 0.5% - 3% - 1%. Doughs were fermented for 45 minutes at 33°C / 80% RH. Then, the breads were baked for 35 min at 240°C.

**Table 2.1: details on Example 2 dough recipes**

| | | **Dough recipes for inhomogeneous salt distribution (1.5% salt)** | | | **Standard bread (2% salt)** |
|---|---|---|---|---|---|
| **Recipe** | **Unit** | **3% Salt** | **1% Salt** | **0.5%Salt** | **2%Salt** |
| Flour | g | 3000 | 3000 | 3000 | 3000 |
| Water | g | 1800 | 1800 | 1800 | 1800 |
| Fresh yeast | g | 90 | 90 | 90 | 90 |
| **Salt** | **g** | **90** | **30** | **15** | **60** |
| Ascorbic acid | mg | 300 | 300 | 300 | 300 |
| Amylase | mg | 120 | 120 | 120 | 120 |

### Saltiness perception and morphology:

The perception of the salty taste of the bread with an inhomogeneous salt distribution (1.5% salt) is similar to that of a bread with a homogeneous salt distribution at a higher salt concentration (2.0% salt). That indicates that the perception of saltiness is enhanced by creating an inhomogeneous distribution of salt.

In the bread with heterogeneous salt distribution, layers differing in thickness were visually observed after baking. The middle layer (3% salt) was the thinnest one. Adaptation of yeast and water dosage, or using different ingredients (emulsifiers, stabilizers, acids, enzymes) can help to overcome this difference in morphology.

Preferably, the ascorbic acid content is in both the first and the second portion substantially the same, and in the range of about 50-100 ppm, such as about 60-80 ppm.

### Example 3: Salt perception in bread

A group of consumers tasted bread samples to evaluate whether an inhomogeneous distribution of salt in bread enhances saltiness perception.

### Samples

Bread samples were prepared as follows:

A lean bread recipe was used, as shown in table 3.1. Salt reduces the yeast activity. Therefore, the amount of yeast in each dough was compensated to obtain a constant fermentation speed in each dough, independent from the salt concentration.

Dough was mixed using Hobart mixers. After pre-fermentation dough with high and low NaCl content was sheeted through a gap size of 2.5 mm. Four of these dough sheets were stacked with alternating high and low salt content. This dough was cut in two parts, which were again stacked. In this way a sheet of dough consisting of 8 layers of dough with alternating high and low NaCl content was created. From this sheet, rectangular shaped dough pieces of 909 grams were made and put in bread tins.

After a final proofing time of 45 minutes breads were baked in closed baking tins. In this way the bread volume is fixed and each slice of bread contained the same overall salt content. The breads were cooled for 1 hour at 28°C before slicing, packaging and storing at - 20°C.

The bread was thawed at 20°C and left for 24 hours before consumption, to perform the sensory test. Samples were pieces of bread crumb which were cut out of the centre of bread slices. The bread samples were typically spherical discs with a diameter of approx. 40 mm and a thickness of approx. 8 mm. The layer thickness of the layers with the alternating salt weight percentages is between 1 cm and 1.5 cm. As a result, in the heterogeneous sample, each spherical disc comprises at least one layer having a high salt content in contact with another layer having a low(er) salt content.

**Table 3.1: Composition of bread doughs**

| | homogeneous | | | heterogeneous | | |
|---|---|---|---|---|---|---|
| | 1% | 1.5% | 2% | low salt dough | high salt dough | Overall 1.5% |
| Flour | 100 | 100 | 100 | 100 | 100 | 100 |
| Water | 58 | 58 | 58 | 58 | 58 | 58 |
| Instant yeast | 1.43 | 1.69 | 1.99 | 1.24 | 2.70 | 1.97 |
| NaCl | 1.00 | 1.50 | 2.00 | 0.25 | 2.75 | 1.50 |
| Datem | 1 | 1 | 1 | 1 | 1 | 1 |
| Ascorbic acid | 50 ppm | 50 ppm | 50 ppm | 50 ppm | 50 ppm | 50 ppm |

### Sensory evaluation

The consumer panel consisted of 63 naïve subjects with no taste or smell defects. The samples were given to the panellists in duplicate in a randomized order. Panellists were asked to rate the saltiness of the sample on a scale from 0-10 (0: not salty; 10: very salty). Before the sensory profiling, the panellists tasted two bread samples with 1% and 2% salt to be familiarized with the anchors of the scale for the evaluations of saltiness perception.

### Results

Bread with a heterogeneous salt distribution is perceived saltier (saltiness score 5.74) than bread with a homogeneous salt distribution (saltiness score 4.98). The difference in saltiness perception is statistically significant at a confidence level <5%. The bread samples had the same total salt content (1.5%) and differed only in the spatial distribution of salt (homogeneous and inhomogeneous).

### Example 4: Tastant inhomogeneity effects in Dutch tin bread

Dutch tin breads with inhomogeneous tastant distributions were compared to breads with homogeneous tastant distributions in a series of directional difference tests (2-AFC (i.e. 2-alternatives forced choice) using a quasi-consumer panel (N=30).

The motivation for these tests was to validate the hypothesis that local taste contrasts evoked by an inhomogeneous distribution of the tastant is easier to notice - compared to a homogeneous distribution - enabling means to reduce the concentration of a tastant whilst maintaining it's original sensory effect. Ribonucleotide-rich yeast extracts containing 28 wt% 5'GMP + 5'IMP and < 22% sodium chloride on dry matter (available from DSM Food Specialties, Delft, the Netherlands as Maxarome® and Maxarite®) were used to amplify the taste contrasts obtained from inhomogeneous distributed salt allowing means to reduce salt whilst maintaining the same saltiness perception levels.

### Samples:

| | |
|---|---|
| Inhomogeneous sample : | a random mixture of 3 cubes of 0.5 wt% salt and 3 cubes of 2.5 |
| | wt.% salt (NaCl) |
| Homogeneous sample: | 6 cubes of 1.5 wt% salt (NaCl) |
| All samples contained 0.3 wt% yeast extract. | |

### Pnotocol

The breads were cut in ~1.5 cm³ cubes and the samples were prepared according to the table above. For each sample, the cubes were simultaneously loaded on the tongue and chewed and evaluated according to a pre-specified presentation order to balance psychophysiological round and carry-over effects across 30 panellists. The task for the assessor was to identify the sample with the most salty taste (2-AFC-test).

### Results

It was found that 21 of the 30 quasi-consumers (70%) identified the inhomogeneous sample as 'most salty' which is significant (p<0.05). This is an important conclusion, as the untrained quasi-consumer panel is considered as representative for the target consumer population.

Further, an inhomogeneous distribution of tastants in an otherwise substantially homogeneous product appears to provide the advantages that the total amount of tastant can be reduced and/or the tastant perception is stronger than in case the tastant distribution would be homogenous, while additionally the consumer may not perceive inhomogeneities.

The term "substantially" herein, such as in "substantially all emission" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of". Likewise, the term about may, where applicable, indicate a deviation of 10% or less, or 5% or less, or 1% or less, or 0.5% or less, or even 0.1% or less, and also in an embodiment no (measureable) deviation. As will be clear to the person skilled in the art, small deviations from numerical values may, where applicable, in general be allowed. Hence, except for the values in the definition of about above, numerical values may, where applicable deviate 10% or less, or 5% or less, or 1% or less, or 0.5% or less, or even 0.1 % or less from the given value. To stress this, herein sometimes the word "about" is used before numerical values.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Use of the verb "to comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

## Claims

1. A flour-based bakery product comprising at least two distinct flour-based bulk regions, including:
a. 5-95% by weight of the bakery product of a first flour-based bulk region comprising 0.05-15% of a tastant by weight of said first bulk region, said tastant being selected from the group consisting of a sugar, a sweetener, a salt, a taste potentiator and an acidulant; and
b. 5-95% by weight of the bakery product of another, second flour-based bulk region not containing said tastant or containing said tastant in a weight percentage that is equal to or less than 50% of the weight percentage of the same tastant in the first flour-based bulk region; wherein the first flour-based bulk region and the second flour-based bulk region together represent at least 30 wt.%, preferably at least 60 wt.% of the bakery product.

2. The flour-based bakery product according to claim 1, wherein the bakery the composition of the first flour-based bulk region defined in percentage by weight and the composition of the second flour-based bulk region defined in percentage by weight are at least 90%, preferably at least 95% identical.

3. The flour-based bakery product according to any one of the preceding clams, wherein the first flour-based bulk region is comprised in the bakery product in the form of layers having a thickness of 2-30 mm

4. The flour-based bakery product according to any one of the preceding clams, wherein the first flour-based bulk region is comprised in the bakery product in the form of discrete regions having a volume of 1 mm³-1000 cm³.

5. The flour-based bakery product according to any one of the preceding clams, wherein the first flour-based bulk region and the second flour-based bulk region together form a lamellar composite.

6. The flour-based bakery product according to any one of the preceding clams, wherein the bakery product may be selected from the group consisting of bread, baked pastry products, pretzels, crackers, a cookie, and a biscuit.

7. The flour-based bakery product according to any one of the preceding clams, wherein the bakery product contains 0.1-3 wt.%, preferably 0.5-2 wt.% of the tastant.

8. The flour-based bakery product according to any one of the preceding clams, wherein the tastant is sodium chloride.

9. The flour-based bakery product according to any one of the preceding clams, wherein the tastant is a sugar selected from sucrose, glucose and fructose.

10. A method for the production of a composite bakery product comprising:
a. preparing a first flour-based dough containing 0.05-15 wt. % of a tastant selected from the group consisting of a sugar, a sweetener, a salt, a taste potentiator and an acidulant;
b. preparing a second flour-based dough not containing said tastant or containing said tastant in a weight percentage that is equal to or less than 50% of the weight percentage of the same tastant in the first flour-based dough;
c. combining the first flour-based dough with the second flour-based dough in a weight ratio that is within the range of 1:20 to 20:1 to produce a dough composite (with distinct flour-based bulk regions); and
d. optionally further processing the dough composite, such as pre-baking or baking the dough composite.

11. The method according to claim 1044, wherein one or more layers of the first flour-based dough are combined with one or more layers of the second flour-based dough to produce a laminated composite dough.

12. The method according to claim 10 or 11, wherein the dough layers have a thickness of 1-10 mm.

13. The method according to any one of claims 10-12, comprising layers comprising a lower tastant content and layers comprising a higher tastant content, wherein these layers alternate.

## Patentansprüche

1. Bäckereierzeugnis auf Mehlbasis umfassend mindestens zwei unterschiedliche Volumenbereiche auf Mehlbasis, enthaltend
a. 5 bis 95 Gew.-% des Bäckereierzeugnisses von einem ersten Volumenbereich auf Mehlbasis umfassend 0,05 bis 15% eines Geschmacksstoffs, bezogen auf das Gewicht des ersten Volumenbereichs, wobei der Geschmacksstoff ausgewählt ist aus der Gruppe bestehend aus einem Zucker, einem Süßstoff, einem Salz, einem Geschmacksverstärker und einem Säuerungsmittel; und
b. 5 bis 95 Gew.-% des Bäckereierzeugnisses von einem anderen zweiten Volumenbereich auf Mehlbasis, der den Geschmacksstoff nicht enthält oder den Geschmacksstoff in einem Gewichtsprozentsatz enthält, der gleich oder kleiner als 50% des Gewichtprozentsatzes des gleichen Geschmacksstoffs in dem ersten Volumenbereich auf Mehlbasis ist; wobei der erste Volumenbereich auf Mehlbasis und der zweite Volumenbereich auf Mehlbasis zusammen mindestens 30 Gew.-%, bevorzugt mindestens 60 Gew.-% des Bäckereierzeugnisses darstellen.

2. Bäckereierzeugnis auf Mehlbasis nach Anspruch 1, wobei die Zusammensetzung des ersten Volumenbereichs auf Mehlbasis, definiert in Gewichtsprozent, und die Zusammensetzung des zweiten Volumenbereichs auf Mehlbasis, definiert in Gewichtsprozent, zu mindestens 90%, bevorzugt mindestens 95% identisch sind.

3. Bäckereierzeugnis auf Mehlbasis nach irgendeinem der vorhergehenden Ansprüche, wobei der erste Volumenbereich auf Mehlbasis in dem Bäckereierzeugnis in Form von Schichten mit einer Dicke von 2 bis 30 mm enthalten ist.

4. Bäckereierzeugnis auf Mehlbasis nach irgendeinem der vorhergehenden Ansprüche, wobei der erste Volumenbereich auf Mehlbasis in dem Bäckereierzeugnis in Form von diskreten Bereichen mit einem Volumen von 1 mm³ bis 1000 cm³ enthalten ist.

5. Bäckereierzeugnis auf Mehlbasis nach irgendeinem der vorhergehenden Ansprüche, wobei der erste Volumenbereich auf Mehlbasis und der zweite Volumenbereich auf Mehlbasis zusammen ein Schichtkomposit bilden.

6. Bäckereierzeugnis auf Mehlbasis nach irgendeinem der vorhergehenden Ansprüche, wobei das Bäckereierzeugnis ausgewählt werden kann aus der Gruppe bestehend aus Brot, Backwaren, Brezel, Kräcker, einem Keks und einem Plätzchen.

7. Bäckereierzeugnis auf Mehlbasis nach irgendeinem der vorhergehenden Ansprüche, wobei das Bäckereierzeugnis 0,1 bis 3 Gew.-%, bevorzugt 0,5 bis 2 Gew.-% des Geschmacksstoffs enthält.

8. Bäckereierzeugnis auf Mehlbasis nach irgendeinem der vorhergehenden Ansprüche, wobei der Geschmacksstoff Natriumchlorid ist.

9. Bäckereierzeugnis auf Mehlbasis nach irgendeinem der vorhergehenden Ansprüche, wobei der Geschmacksstoff ein Zucker ausgewählt aus Sucrose, Glucose und Fructose ist.

10. Verfahren zur Herstellung eines Komposit-Bäckereierzeugnisses umfassend:
a. Herstellen eines ersten Teigs auf Mehlbasis enthaltend 0,05 bis 15 Gew.-% eines Geschmacksstoffs ausgewählt aus der Gruppe bestehend aus einem Zucker, einem Süßstoff, einem Salz, einem Geschmacksverstärker und einem Säuerungsmittel; und
b. Herstellen eines zweiten Teigs auf Mehlbasis, der den Geschmacksstoff nicht enthält oder den Geschmacksstoff in einem Gewichtsprozentsatz enthält, der gleich oder kleiner als 50% des Gewichtprozentsatzes des gleichen Geschmacksstoffs in dem ersten Teig auf Mehlbasis ist;
c. Kombinieren des ersten Teigs auf Mehlbasis mit dem zweiten Teig auf Mehlbasis in einem Gewichtsverhältnis, der im Bereich von 1:20 bis 20:1 liegt, um einen Teigkomposit (mit unterschiedlichen Volumenbereichen auf Mehlbasis) herzustellen; und
d. gegebenenfalls weiteres Verarbeiten des Teigkomposits, wie Vorbacken oder Backen des Teigkomposits.

11. Verfahren nach Anspruch 10, wobei eine oder mehrere Schichten des ersten Teigs auf Mehlbasis mit einer oder mehreren Schichten des zweiten Teigs auf Mehlbasis kombiniert werden, um einen geschichteten Kompositteig herzustellen.

12. Verfahren nach Anspruch 10 oder 11, wobei die Teigschichten eine Dicke von 1 bis 10 mm aufweisen.

13. Verfahren nach irgendeinem der Ansprüche 10 bis 12, umfassend Schichten umfassend einen geringeren Gehalt an Geschmacksstoff und Schichten umfassend einen höheren Gehalt an Geschmacksstoff, wobei diese Schichten alternieren.

## Revendications

1. Produit de boulangerie à base de farine, comportant au moins deux régions massives distinctes à base de farine, comprenant :
a. 5 % en poids à 95 % en poids du produit de boulangerie d'une première région massive à base de farine comprenant 0,05 % à 15 % d'un exhausteur de goût en poids de ladite première région massive, ledit exhausteur de goût étant choisi dans le groupe constitué par un sucre, un édulcorant, un sel, un potentialisateur de goût et un acidulant ; et
b. 5 % en poids à 95 % en poids du produit de boulangerie d'une seconde région massive à base de farine ne contenant pas ledit exhausteur de goût ou contenant ledit exhausteur de goût à un pourcentage en poids qui est inférieur ou égal à 50 % du pourcentage en poids du même exhausteur de goût se trouvant dans la première région massive à base de farine ; la première région massive à base de farine et la seconde région massive à base de farine représentant ensemble au moins 30 % en poids, de préférence au moins 60 % en poids du produit de boulangerie.

2. Produit de boulangerie à base de farine selon la revendication 1, dans lequel la composition de la première région massive à base de farine définie en pourcentage en poids et la composition de la seconde région massive à base de farine définie en pourcentage en poids sont au moins à 90 % identiques, de préférence au moins à 95 % identiques.

3. Produit de boulangerie à base de farine selon l'une quelconque des revendications précédentes, dans lequel la première région massive à base de farine est contenue dans le produit de boulangerie sous la forme de couches possédant une épaisseur allant de 2 mm à 30 mm.

4. Produit de boulangerie à base de farine selon l'une quelconque des revendications précédentes, dans lequel la première région massive à base de farine est contenue dans le produit de boulangerie sous la forme de régions discrètes possédant un volume allant de 1 mm³ à 1000 cm³.

5. Produit de boulangerie à base de farine selon l'une quelconque des revendications précédentes, dans lequel la première région massive à base de farine et la seconde région massive à base de farine forment ensemble un composite lamellaire.

6. Produit de boulangerie à base de farine selon l'une quelconque des revendications précédentes, dans lequel le produit de boulangerie peut être choisi dans le groupe constitué par le pain, les produits de pâtisserie cuits au four, les bretzels, les biscuits salés, un cookie et un biscuit.

7. Produit de boulangerie à base de farine selon l'une quelconque des revendications précédentes, dans lequel le produit de boulangerie contient 0,1 % en poids à 3 % en poids, de préférence 0,5 % en poids à 2 % en poids de l'exhausteur de goût.

8. Produit de boulangerie à base de farine selon l'une quelconque des revendications précédentes, dans lequel l'exhausteur de goût est le chlorure de sodium.

9. Produit de boulangerie à base de farine selon l'une quelconque des revendications précédentes, dans lequel l'exhausteur de goût est un sucre choisi parmi le saccharose, le glucose et le fructose.

10. Procédé de production d'un produit composite de boulangerie, comprenant :
a. la préparation d'une première pâte à base de farine contenant 0,05 % en poids à 15 % en poids d'un exhausteur de goût choisi dans le groupe constitué par un sucre, un édulcorant, un sel, un potentialisateur de goût et un acidulant ;
b. la préparation d'une seconde pâte à base de farine ne contenant pas ledit exhausteur de goût ou contenant ledit exhausteur de goût à un pourcentage en poids qui est inférieur ou égal à 50 % du pourcentage en poids du même exhausteur de goût se trouvant dans la première pâte à base de farine ;
c. la combinaison de la première pâte à base de farine et de la seconde pâte à base de farine à un rapport pondéral qui est situé dans la plage allant de 1 : 20 à 20 : 1 pour produire une pâte composite (ayant des régions massives distinctes à base de farine) ; et
d. facultativement, le traitement supplémentaire de la pâte composite, comme la pré-cuisson ou la cuisson de la pâte composite.

11. Procédé selon la revendication 10, dans lequel une ou plusieurs couches de la première pâte à base de farine sont combinées avec une ou plusieurs couches de la seconde pâte à base de farine pour produire une pâte composite stratifiée.

12. Procédé selon la revendication 10 ou 11, dans lequel les couches de pâte ont une épaisseur de 1 mm à 10 mm.

13. Procédé selon l'une quelconque des revendications 10 à 12, comprenant des couches comprenant une teneur basse en exhausteur de goût et des couches comprenant une teneur élevée en exhausteur de goût, ces couches étant alternées.
